# EUROPEAN PATENT SPECIFICATION

(11) **EP 1 864 483 B1**
(45) Date of publication and mention of the grant of the patent: **18.05.2011**
(21) Application number: 06727417.5
(22) Date of filing: 17.03.2006
(51) Int. Cl.: H04N 5/04

(54) **AUTOMATIC AUDIO AND VIDEO SYNCHRONIZATION**
AUTOMATISCHE AUDIO- UND VIDEOSYNCHRONISATION
SYNCHRONISATION AUDIO/VIDEO AUTOMATIQUE

(30) Priority: 18.03.2005 US 907073
(43) Date of publication of application: 12.12.2007
(73) Proprietor: Broadcom Corporation, Irvine, CA 92617 (US)
(72) Inventor: SWAN, Philip, Ontario, L4C 6C5 (CA); STRASSER, David, A., Ontario, M4L 1X8 (CA)
(74) Representative: Bosch, Matthias
(86) International application number: PCT/IB2006/000774
(87) International publication number: WO 2006/097845

(56) References cited:
- EP-A- 1 067 773
- EP-A- 1 104 179

## Description

The present invention relates generally to synchronizing audio and video and more specifically to automatically synchronizing audio and video output in a multi-component multi-media processing system.

### BACKGROUND OF THE INVENTION

In existing audio and video multi-media systems, there has been an increase in growth in separate audio and video processing components. In these typical systems, a first group of processing elements may be utilized to generate a video signal and a second group of processing elements may be utilized to generate an audio signal. For example, in a flat panel television display, the flat panel display does not necessarily include speakers. Therefore, a separate audio subsystem must be utilized, such as a surround sound system integrated within an existing viewing area, such as a living room.

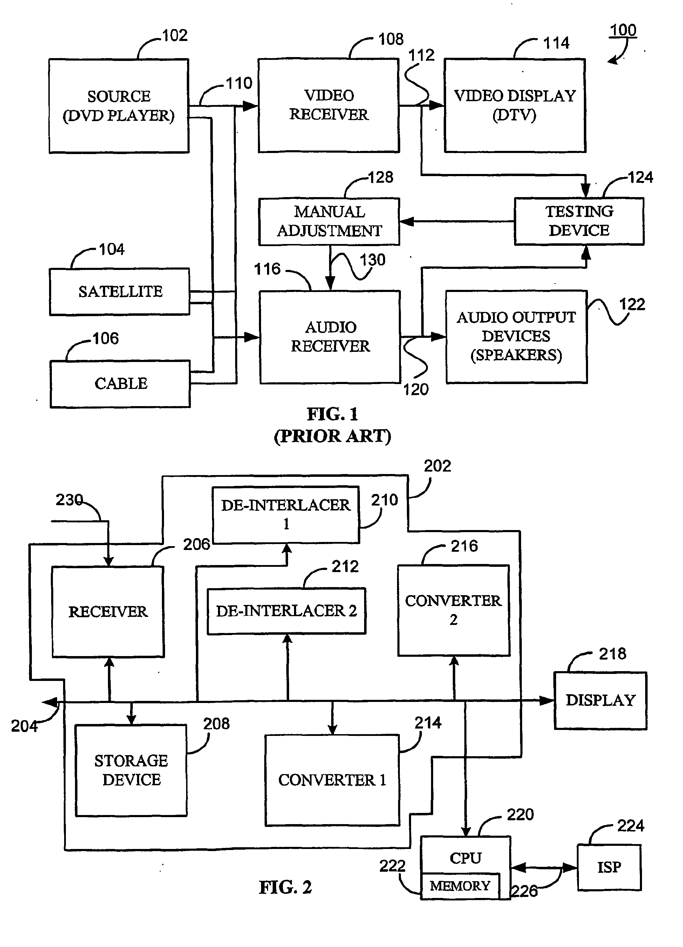

FIG. 1 illustrates a graphical representation of a prior art audio and video processing system 100. The system includes a source device 102, such as any suitable source for generating an incoming signal. In one exemplary embodiment, the source may be a digital versatile disk (DVD) player, a digital video recording device, or any other suitable device capable of reading audio and video information off of a stored medium. In the system 100, other input sources such as a satellite receiver 104 or a cable receiver 106 may also be utilized to receive incoming audio and video signals.

In the system 100, a video receiver 108 is operative to receive a video signal 110 from at least one of the various sources, such as the exemplary sources of the video source 102, satellite receiver 104 or cable receiver 106. The video receiver 108 may perform image processing operations to generate an output video signal 112 which is provided to a video display 114, such as a standard television.

The system 100 further includes an audio receiver 116 which is operative to receive an audio signal 118 from at least one of the different sources, such as the video source 102, satellite receiver 104 and cable receiver 106. The audio receiver 116 may be any suitable audio receiving device capable of receiving the incoming audio signal and performing signal processing to generate an output audio signal 120 to an audio output device or devices 122, such as speakers, 122.

In the system 100, the prior art approach for synchronizing the video signal 112 and the audio signal 120 to the video display 114 and corresponding audio output devices 122, respectively, is manual configuration. Typically, during the installation of the signal processing components such as the video receiver 108 and the audio receiver 116, a technician manually utilizes a testing device 124. The testing device may be any suitable processing device capable of receiving the video signal 112 and the audio signal 120. The testing device 124 is operative to determine a delay interval between a particular frame of video data 112 with a corresponding audio portion 120. Based on this calculated delay, the testing device then generates a delay signal 126 which is provided to a display for allowing manual adjustment 128.

FIG. 1 illustrates functional block 128 for manual adjustment, but as recognized by one having ordinary skill in the art, functional block 128 represents a physical action to be performed by a technician for manually adjusting a corresponding offset amount 130 within the audio receiver 116. Therefore, due to utilization of a technician and manual adjustment 128 of an offset amount 130 based on the detected offset 126 from the testing device 124, the audio receiver 116 may be tweaked to align the audio output to the video output.

The current approach for synchronizing audio and video output requires manual adjustment 128 of the audio receiver 116 corresponding to delay within the video receiver 108. Not only does this approach require a technician or technically advanced user to manually adjust the audio receiver 116, the present approach is only operative for the configuration of the video receiver 108.

With the growth of networking capabilities and multiple processing engines operably in communication across multiple networks, there exists the ability to allow for improved video rendering by using available rendering resources. If the combination of rendering resources is adjusted beyond the configuration within the video receiver 108, the current approach would require further manual adjustment 128 to synchronize audio and video output. Furthermore, the manual adjustment would only be good for the existing solution and would once again require further adjustment of the timing sequence of audio and video output should any other configurations become available.

For example, if on a home computer network, a television set top box is in communication with a first home computer and a second home computer, different processing resources may be utilized between different computers and the set top box to allow for maximizing available processing resources and generating the best possible video output. Although, in this system there would require inherent delay based on video signal processing which must be correspondingly provided to the audio receiver, such as the audio receiver 116. Current techniques do not allow for automatic adjustment of timing sequences for synchronizing audio and video output. Therefore, there exists a need for improving synchronization of audio and video output signals in a networking environment.

European patent applications EP 1 067 773 A and EP 1 104 179 A disclose a method and apparatus for automatic audio and video output synchronization, wherein a video delay time period is calculated based on a signal processing routine to generate the video display signal.

### SUMMARY OF THE INVENTION

According to the present invention there is provided a method for automatic audio and video output synchronization and a system for automatic audio and video output synchronization as claimed in claims 1 and 11.

### BRIEF DESCRIPTION OF THE DRAWINGS

FIG. 1 illustrates a block diagram of a prior art audio and video synchronization system;
FIG.2 illustrates a schematic block diagram of a system for audio and video synchronization in accordance with one embodiment of the present invention;
FIG. 3 illustrates a schematic block diagram of one embodiment of a system for audio and video synchronization;
FIG. 4 illustrates a flowchart of a method for audio and video synchronization in accordance with one embodiment of the present invention; and
FIG. 5 illustrates a flowchart of a method for generating a master and processing device configuration routine in accordance with one embodiment of the present invention.

### DETAILED DESCRIPTION OF THE PREFERRED EMBODIMENTS

Briefly, the present invention provides for automatic audio and video synchronization by calculating a video delay time period based on a signal processing routine to generate the video display signal and automatically setting an audio delay to approximate the video delay time period. In addition the method may include if desired, determining a master device from a plurality of master capable devices. The master device is a processing device including one or more processors capable of making configuration decisions and designating a data flow for rendering a video signal. The master-capable devices are any suitable processing devices which are capable of acting as a master device. The present invention may further include using the master device to determine a signal processing routine to generate a video display signal. The signal processing routine includes a designated data flow from one processing element to a next processing element to a next processing element and so on for different stages of video signal rendering.

The video delay time period may be calculated based on the delay of an incoming video signal and the signal being provided to all of the different processing devices until the generation of a subsequent video output signal. Furthermore, the present invention includes using the master device to automatically set an audio delay in an audio processing device to a time period approximate to the video delay time period. The audio processing device may be any suitable audio processor capable of receiving an incoming audio signal and thereupon generating a corresponding audio output signal for an audio display, such as a plurality of speakers.

Thereupon, the present invention allows for the automatic adjustment of audio and video synchronization. A master device is determined from a plurality of master capable devices such that the master device determines the system processing routine. In a network system, multiple signal processing routines may be utilized based on available resources. Using various techniques, optimized signal processing routines may be determined which have varying delays. The present invention allows for not only the generation of a particular processing routine, but also the determination of the corresponding delay and the automatic audio offset relative to the delay, thereby seamlessly providing an end user with synchronized audio and video output across two different output devices.

FIG. 2 illustrates a graphical representation of a schematic block diagram of a system for automatic audio and video output synchronization 200. The system 200 includes a plurality of video processing devices 202 operably coupled across a network connection 204. The network 204 may be any suitable network, such as an Intranet, Internet, wireless network, wired network, or any other suitable compilation of connections allowing for interactive communication therethrough. In one exemplary embodiment illustrated in FIG. 2, the system 200 includes a receiver 206, a storage device 208, a first deinterlacer 210, a second deinterlacer 212, a first converter 214 and a second converter 216. The receiver 206 may be any suitable receiving device, such as a cable receiver, Internet video broadcast receiver, telco receiver, satellite receiver, and also includes a video source generator, such as a DVD player, a personal video recording device, a memory module storing audio and video therein, or any other suitable type of receivers or storage devices as recognized by one having ordinary skill in the art.

The first deinterlacer 210 and the second deinterlacer 212 may be any suitable type of processing device capable of performing deinterlacing operations. For example, the first deinterlacer 210 may be disposed on a computing device operably coupled via a home network and the second deinterlacer 212 may be disposed within a processing device across an Internet connection. As recognized by one having ordinary skill in the art, the first deinterlacer 210 and the second deinterlacer 212 may be disposed at any location such that they are in communication with the network 204 for receiving and communicating data thereacross.

The first and second converters 214 and 216, respectively, may be any suitable type of converter capable of receiving an incoming data signal and thereupon converting a converted output signal. As recognized by one having ordinary skill in the art, with the growth of improved quality video display devices, such as display 218, conversion techniques may be required to convert an incoming signal having an existing frame ratio to a corresponding frame ratio required for a specified display, such as display 218. It should also be noted that converter one 214 and converter two 216 may also be located at any suitable location such that they are in operative communication with the network 204.

The system 200 further includes a processing unit 220 which may be one or more processing devices capable of performing processing operations. In one embodiment, the CPU 220 may further include a memory 222 capable of storing executable instructions such that the CPU 220 may be able to perform specific operations in response to the corresponding executable operations.

In one embodiment, the system 200 may further include an Internet service provider (ISP) 224 in operative communication with the CPU 220, such as across a network connection 226. The ISP 224 may be any suitable outside connection, such as a third party software or other available resource, for providing the CPU 220 with extraneous processing operations or executable instructions.

The present invention provides for generating a signal processing routine. In one embodiment, the signal processing routine is generated by the master device which, as described above, is any processing device capable of controlling and generating a corresponding processing routine. In one exemplary embodiment, the CPU 220 may be the master device based on the included processors. Although, it should be noted that any other suitable device operably connected to the network 204 may be a suitable master device, referred to above as a master-capable device. As also noted, the system 200 illustrates a single CPU 220 but in a networked computing environment, any suitable number of CPUs or other processing devices may be connected to the network 204.

In the exemplary embodiment of the CPU 220 acting as a master device, the master device determines the signal processing routine based on available resources. For example, the master device may determine a signal processing routine based on availability and quality of various components. For example, a system may have two deinterlacers, such as deinterlacer one 210 and deinterlacer two 212 which are capable of providing deinterlacing. The master device, the CPU 220, may determine that the first deinterlacer 210 is currently being utilized by different processing elements and is therefore unavailable or in another exemplary embodiment, the second deinterlacer 212 may have a lower quality rating than the first deinterlacer 210. As recognized by one having ordinary skill in the art, any suitable criteria may be utilized to determine which elements are utilized when more than one capable element exists in the network environment.

In one example, a receiver 206 may receive an incoming signal 230, such as an NTSC signal. The receiver 206 may allow for conversion from NTSC format to 480i format of the signal. The second deinterlacer 212 may thereupon be a deinterlacer allowing for the conversion of 480i signal to 480p signal. The second converter 216 may allow for the conversion from a 60 Hz to an 85 Hz signal and the first converter 214 may allow for the conversion from a 480p data signal to a 1080p data signal. In the exemplary embodiment, the display may also include requiring 85 Hz signal and 1080P data signal. In this exemplary embodiment, the storage device 208 may include a tuner for a signal having 1080i data and the first deinterlacer 210 may include deinterlacing from 1080i to 1080p at 60 Hz. Therefore, to generate the proper display signal, the master device, the CPU 220, may generate a processing routine consisting of the receiver 206 to the second deinterlacer 212 to the second converter 216 to the first converter 214 and subsequently to the display 218. In this embodiment, the storage device 208 and the first deinterlacer 210 would not be accessed.

Therefore, the master device 220 would determine the delay in processing a video signal to generate a video display on the display 218. This delay would be calculated as a video delay time period and is based on the signal processing routine to generate the video display signal. In one embodiment, the ISP 226 may provide for an off-site configuration service. For example, an ISP 226 may include a system that recognizes available configurations and determines the signal processing routine using available ISP 226 algorithms and processing resources.

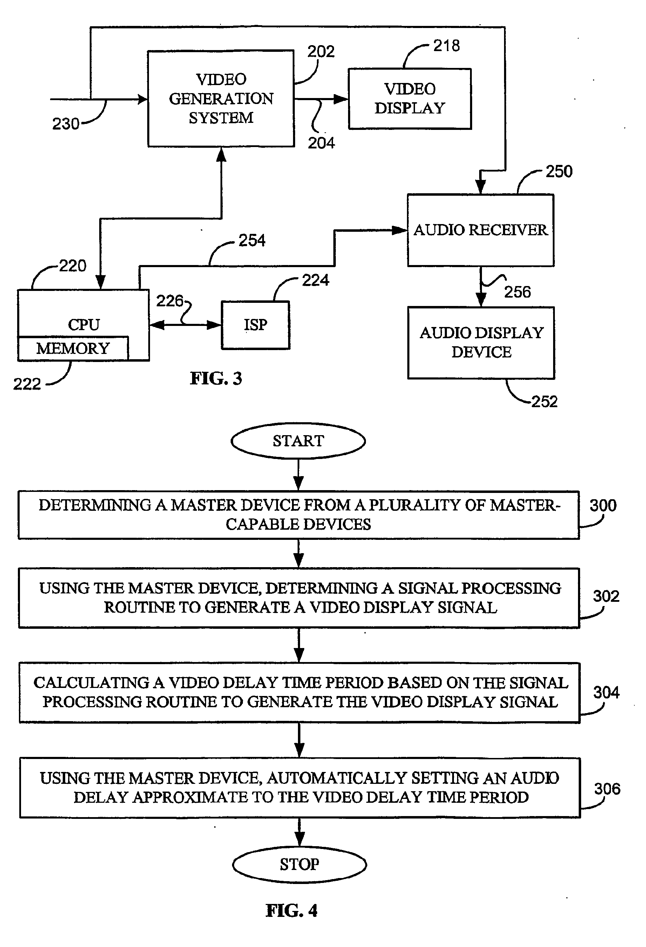

FIG. 3 illustrates a further embodiment to the present invention. The CPU 220, in response to executable instructions 222, when the CPU 220 act as the master device, thereupon determines the video delay time period. The system 202 receives the incoming signal 230 which is also provided to an audio receiver 250. The audio receiver 250 may be any suitable type of audio receiving device as recognized by one having ordinary skill in the art. The audio receiver 250 is coupled to an audio display device 252 which may be any suitable type of device displaying audio output, such as a speaker or plurality of speakers in a speaker system. The CPU 220 provides the video delay time period 254 to the audio receiver 250. The audio receiver 250 in response to the video delay time period 254 thereupon sets an audio delay approximate the video delay time period. The audio receiver 250 operates in accordance to the standard audio receiver techniques to set an internal delay consisting of buffering a particular amount of audio output for a particular time period. Thereupon, the audio receiver 250 generates the audio output 256 such that the audio display device 252 and the video display 218 both provide audio and video output in synchronization with each other.

FIG. 4 illustrates a flowchart with steps of one embodiment of a method for automatic audio and video output synchronization. The method begins by, if desired, determining a master device from a plurality of master-capable devices, step 300. As discussed above, the master device may be any suitable device capable of performing and processing operations as discussed above. The next step, step 302, if desired, is using the master device to determine a signal processing routine to generate a video display signal. As discussed above, the routine may include selecting one or more processing elements across a network or within a single processing environment to generate the video display signal. Step 304 is calculating a video delay time period based on the signal processing routine to generate the video display signal. Thereupon, step 306 is using the master device to automatically set an audio delay approximate to the video delay. Thereupon, in one embodiment of present invention, the method is complete.

The method may further include generating the video display signal using the signal processing routine such that the video display 218 provides a video output. The method further includes generating an audio display signal after a time interval of the video delay time period. The audio display signal may be generated and then buffered for a particular interval or may be buffered and then generated, regardless thereof the audio receiver, such as the audio receiver 250 of FIG. 3, provides for a delayed output of the audio output signal 256.

The present invention further includes determining a plurality of slave devices. As discussed with respect to FIG. 2, a slave device is defined as any device capable of being a master device and all master-capable devices which are deemed to not be the particular master device. Therefore, in the exemplary embodiment discussed above with regards to FIG. 2, the CPU 220 is determined to be the master, therefore the slave devices would be receiver 206, the storage device 208, the first deinterlacer 210, the second deinterlacer 212, the first converter 214 and the second converter 216. Thereupon, the signal processing routine is based on the plurality of slave devices.

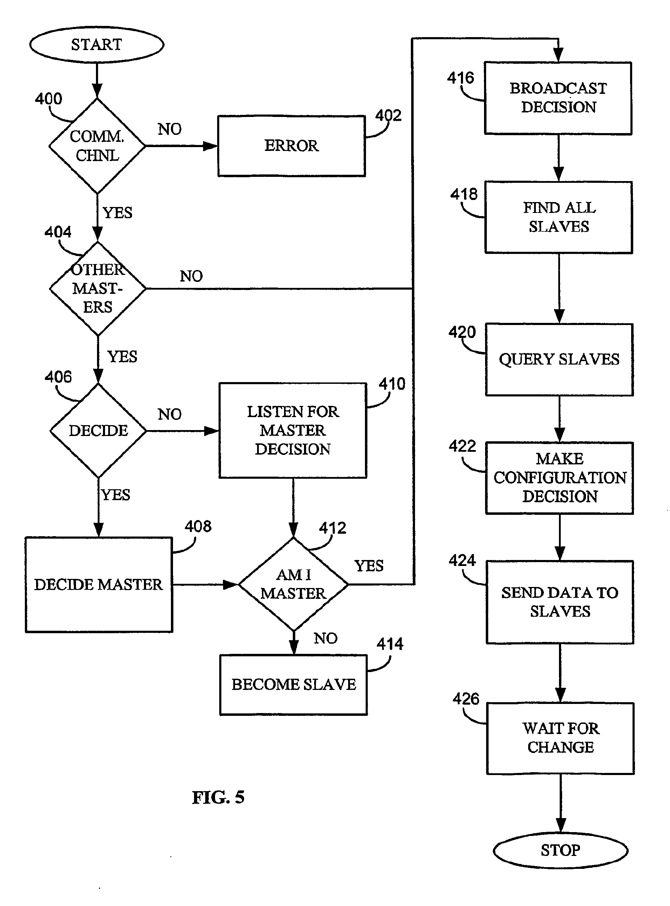

FIG. 5 illustrates a flowchart of another embodiment of the present invention including the determination of the status of the processing elements within the audio and video synchronization process. The method begins by determining if a processing environment includes a communication channel, step 400. If no communication channel exists, an error is registered such that the present invention will be unable to determine a signal processing routine and therefore unable to provide for synchronized audio and video output. In the event that a communication channel does exist, step 404 is to determine if other masters exist. If other masters exist, step 406 is deciding which of the available master-capable devices is to be the designated master.

If a particular master-capable device is determined to be the device that determines which device is the master, the method proceeds to step 408 such that a decision is made as to which of the master-capable devices is the master. For example, the decision of step 408 may be performed by determining which master-capable device has the most available processing resources, which devices are in communication with an external service provider, which devices are most aptly suited for performing this function such as using a ratings system, or any other suitable technique to decide which processing device is the master.

In step 406, if a particular processing device is not the processing device that determines which master-capable device is to be the master, the method proceeds to step 410 such that the master-capable devices listen for the master decision. Therefore, once a decision for one of the master-capable devices to become the master, a master decision signal may be sent to all of the master-capable devices indicating the decision of which processing device is to become the master. Thereupon, step 412 is a determination for each of the master-capable devices if that processing element is to be the master.

If the determination of step 412 is that a master-capable device is not to be the master, that processing device thereupon automatically becomes a slave device 414. Although, if the determination of step 412 is yes, the processing device is to become the master device, the master device thereupon is to broadcast the master decision to all master-capable devices, step 416. Reverting back to step 410, therefore, if a processing device does not determine who is the master, the processing device performs step 410 to listen for the master decision and once a master decision is received, the processing device can determine if that device has in fact become the master or is to become a slave device. Also referring back to step 404, in the event there is only a single master-capable device, that device by default becomes the master such that the method would proceed to step 416.

After step 416, the method includes step 418 which is finding all slaves. As discussed above with respect to FIG. 2, the slaves include the elements disposed within the processing system 202 when the CPU 220 has been designated as the master. Step 420 is the query of the slaves to determine the processing capabilities and abilities of each of the slave devices. Step 422 is to make a configuration decision. This configuration decision may be based upon any suitable factors, as discussed above, or in another embodiment may be based on a third party providing configuration across an internet service provider, such as ISP 224 of FIG. 2. In one embodiment, a separate configuration service may be available such that a master device may provide the slave information to a configuration processing device which then upon generates the optimum configuration and provides the configuration decision back to the master device.

Regardless thereof, the configuration decision is made and the configuration format is sent to the slaves, step 424. In one embodiment, the configuration information includes information indicating where a particular slave should receive incoming video signal and to which device the slave may thereupon provide further signals. As such, the master routes video information through a specific path using the slave devices. For example, the receiver 206 of FIG. 2 may be instructed to provide information directly to the first deinterlacer 210 and the first deinterlacer 210 may thereupon provide information directly to the second converter 216. As recognized by one having ordinary skill in the art, any suitable configuration may be utilized - with any suitable number of slave devices, specifically video processing devices or other suitable processing element to provide for configuration and subsequent display of video output.

Thereupon, from the system perspective, the slave devices wait for change data, step 426. Based upon subsequent change data, unless instructed otherwise, the slave devices will maintain an existing directional relationship of data flow from slave to slave or otherwise referred to as from processing element to processing element. Thereupon, in one embodiment of the present invention, the method is complete.

As such, the present invention improves over the prior art techniques, as discussed above with respect to FIG. 1 by not only configuring processing elements for video rendering, but also for the automatic determination of a delay time and the subsequent offset of audio processing. The present invention allows a user to seamlessly engage multiple processing elements in a networked environment for the generation of video rendering. The present invention further determines delays generated by these networked rendering environment and automatically offsets the corresponding audio output such that an end user simultaneously receives both the video and audio on separate output systems,

It should be understood that the implementation of other variations and modifications of the invention in its various aspects would be apparent to those ordinary skill in the art, if the invention is not limited by the specific embodiment described herein. For example, the present invention could also subsequently delay the video output by a corresponding delay factor based on buffering video content for the determined time interval wherein the present invention buffers a delayed amount of audio information based on ease memory and buffering requirements for audio data compare with video data. Therefore, contemplated to cover by the present invention, any and all modifications, variations or equivalence that fall within the scope of the basic underlying principals disclosed and claimed herein.

## Claims

1. A method for automatic audio and video output synchronization, the method comprising:
calculating a video delay time period based on a signal processing routine including a designated data flow between a plurality of processing elements to generate the video display signal; and:
automatically setting an audio delay to approximate the video delay time period;
**characterised by**:
determining a plurality of slave devices as the plurality of processing elements to generate the video display signal; and
determining the signal processing routine comprising the designated data flow between the plurality of slave devices based on the availability and quality of each of the plurality of slave devices by a master device.

2. The method of claim 1, further comprising generating the video display signal using the signal processing routine.

3. The method of claim 1 or claim 2, further comprising generating an audio display signal after a time interval of the video delay time period.

4. The method of claim 3, further comprising providing the audio display signal to an audio display device, wherein the audio display device is a plurality of speakers.

5. The method of any one of the preceding claims, further comprising:
providing the video display signal to a video display device.

6. The method of claim 5, wherein the video display device is a digital television.

7. The method of any one of claims 1 to 6, further comprising routing video information via a specified path corresponding to the signal processing routine using the plurality of slave devices.

8. The method of any one of claims 1 to 7, wherein at least one of the slave devices is also a master-capable device.

9. The method of any one of claims 1 to 8, wherein the master device and the plurality of slave devices are in operative communication across a network.

10. The method of any one of claims 1 to 9, including:
determining a master device from a plurality of master-capable devices; and
using the master device, determining the signal processing routine to generate the video display signal.

11. A system (200) for automatic audio and video output synchronization, the system, **characterised by**:
a plurality of operably coupled slave devices (206,208,210,212,214,216);
a master device (220) operable coupled to the plurality of slave devices (206,208,210,212,214,216), the master device (220) operative to determine a signal processing routine including a designated data flow between the plurality of slave devices (206,208,210,212,214,216) based on the availability and quality of each of the plurality of slave devices (206,208,210,212,214,216) and the master device (220) operative to calculate a video delay time period based on the signal processing routine;
one of the plurality of slave devices (206,208,210,212,214,216) operative to receive a video input signal and at least one of the plurality of slave devices (206,208,210,212,214,216) operative to generate a video output signal; and
an audio receiver (250) operably coupled to receive an audio input signal and operative to generate an audio output signal delayed by a time period approximate to the video delay period.

12. The system of claim 11, wherein the master device (220) is operably coupled to the plurality of slave devices across (206,208,210,212,214,216) a network (204).

13. The system of any one of claims 11 to 12, wherein each of the plurality of slave devices (206,208,210,212,214,216) is a video processing device (202).

14. The system of any one of claims 11 to 13, wherein the master device (220) is operably coupled to an audio processing device such that the audio delay may be programmed in the audio processing device.

15. The system of any one of claims 11 to 14, further comprising at least one master-capable device, each of which is capable of acting as the master device (220), wherein the master device (220) is one of the at least one master-capable device and is operative to determine or is capable of being instructed that it is the master device (220).

16. The system of claim 15, wherein one or more of the plurality of slave devices (206,208,210,212,214,216) is a corresponding one of the at least one master-capable device.

17. The system of any one of claims 11 to 16, wherein the master device (220) comprises:
memory (222) operative to store a plurality of executable instructions; and
at least one processing device operably coupled to the memory (222) such that the at least one processing device is operative in response to the executable instructions to:
determine the signal processing routine based on at least one of the plurality of slave devices (206,208,210,212,214,216); and
calculate the video delay time period based on the signal processing routine.

18. The system of any one of claims 11 to 17, wherein the master device (220) is operable to route the video information through a specific path corresponding to the determined signal processing routine using the plurality of slave devices (206,208,210,212,214,216).

## Patentansprüche

1. Verfahren zur automatischen Synchronisation von Audio- und Videoausgängen, wobei das Verfahren umfasst:
- Berechnen einer Videoverzögerungszeitspanne basierend auf einer Signalverarbeitungsroutine, die einen designierten Datenfluss zwischen einer Mehrzahl Verarbeitungselemente umfasst, um ein Videoanzeigesignal zu erzeugen, und
- automatisches Einstellen einer Audioverzögerung, um sie an die Videoverzögerungszeitspanne anzugleichen,
**gekennzeichnet durch**:
- Festlegen einer Mehrzahl Slave-Einrichtungen als die Mehrzahl Verarbeitungselemente, um das Videoanzeigesignal zu erzeugen, und
- Festlegen der Signalverarbeitungsroutine, die den designierten Datenfluss zwischen der Mehrzahl Slave-Einrichtungen umfasst, basierend auf der Verfügbarkeit und Qualität einer jeden der Mehrzahl Slave-Einrichtungen durch eine Master-Einrichtung.

2. Verfahren nach Anspruch 1,
das ferner das Erzeugen des Videoanzeigesignals unter Verwendung der Signalverarbeitungsroutine umfasst.

3. Verfahren nach Anspruch 1 oder 2,
das ferner das Erzeugen eines Audioanzeigesignals nach einem Zeitintervall der Videoverzögerungszeitspanne umfasst.

4. Verfahren nach Anspruch 3,
das ferner das Zuführen des Audioanzeigesignals an eine Audioanzeigeeinrichtung umfasst, wobei die Audioanzeigeeinrichtung aus einer Mehrzahl Lautsprechern besteht.

5. Verfahren nach einem der vorhergehenden Ansprüche,
das ferner umfasst:
Zuführen des Videoanzeigesignals an eine Videoanzeigeeinrichtung.

6. Verfahren nach Anspruch 5,
wobei die Videoanzeigeeinrichtung ein digitales Fernsehgerät ist.

7. Verfahren nach einem der Ansprüche 1 bis 6,
das ferner das Führen von Videoinformationen über einen spezifizierten Pfad entsprechend der Signalverarbeitungsroutine unter Verwendung der Mehrzahl Slave-Einrichtungen umfasst.

8. Verfahren nach einem der Ansprüche 1 bis 7,
wobei zumindest eine der Slave-Einrichtungen außerdem eine masterfähige Einrichtung ist.

9. Verfahren nach einem der Ansprüche 1 bis 8,
wobei die Master-Einrichtung und die Mehrzahl Slave-Einrichtungen über ein Netzwerk in Wirkverbindung stehen.

10. Verfahren nach einem der Ansprüche 1 bis 9,
das umfasst:
- Festlegen einer Master-Einrichtung aus einer Mehrzahl masterfähiger Einrichtungen, und
- Festlegen, unter Verwendung der Master-Einrichtung, der Signalverarbeitungsroutine, um das Videoanzeigesignal zu erzeugen.

11. System (200) zur automatischen Synchronisation von Audio- und Videoausgängen, wobei das System **gekennzeichnet ist durch**:
- eine Mehrzahl betriebsfähig gekoppelter Slave-Einrichtungen (206, 208, 210, 212, 214, 216),
- eine Master-Einrichtung (220), die betriebsfähig mit der Mehrzahl Slave-Einrichtungen (206, 208, 210, 212, 214, 216) gekoppelt ist, wobei die Master-Einrichtung (220) betriebsfähig dafür ausgelegt ist, eine Signalverarbeitungsroutine, die einen designierten Datenfluss zwischen der Mehrzahl Slave-Einrichtungen (206, 208, 210, 212, 214, 216) umfasst, basierend auf der Verfügbarkeit und Qualität einer jeden der Mehrzahl Slave-Einrichtungen (206, 208, 210, 212, 214, 216) festzulegen, und die Master-Einrichtung (220) betriebsfähig dafür ausgelegt ist, eine Videoverzögerungszeitspanne basierend auf der Signalverarbeitungsroutine zu berechnen,
- wobei eine der Mehrzahl Slave-Einrichtungen (206, 208, 210, 212, 214, 216) betriebsfähig dafür ausgelegt ist, ein Videoeingangssignal zu empfangen, und zumindest eine der Mehrzahl Slave-Einrichtungen (206, 208, 210, 212, 214, 216) betriebsfähig dafür ausgelegt ist, ein Videoausgangssignal zu erzeugen, und
- einen Audio-Empfänger (250), der betriebsfähig angeschlossen ist, um ein Audioeingangssignal zu empfangen, und betriebsfähig dafür ausgelegt ist, ein Audioausgangssignal zu erzeugen, das **durch** eine an die Videoverzögerungszeitspanne angeglichene Zeitspanne verzögert ist.

12. System nach Anspruch 11,
wobei die Master-Einrichtung (220) über ein Netzwerk (204) betriebsfähig mit der Mehrzahl Slave-Einrichtungen (206, 208, 210, 212, 214, 216) gekoppelt ist.

13. System nach einem der Ansprüche 11 bis 12,
wobei jede der Mehrzahl Slave-Einrichtungen (206, 208, 210, 212, 214, 216) eine Videoverarbeitungseinrichtung (202) ist.

14. System nach einem der Ansprüche 11 bis 13,
wobei die Master-Einrichtung (220) betriebsfähig mit einer Audioverarbeitungseinrichtung gekoppelt ist, so dass die Audioverzögerung in die Audioverarbeitungseinrichtung programmiert werden kann.

15. System nach einem der Ansprüche 11 bis 14,
das ferner zumindest eine masterfähige Einrichtung umfasst, von denen jede dazu in der Lage ist, als Master-Einrichtung (220) zu fungieren, wobei die Master-Einrichtung (220) eine der zumindest einen masterfähigen Einrichtungen ist und betriebsfähig dafür ausgelegt ist, festzulegen oder instruiert werden kann, dass sie die Master-Einrichtung (220) ist.

16. System nach Anspruch 15,
wobei eine oder mehrere der Mehrzahl Slave-Einrichtungen (206, 208, 210, 212, 214, 216) eine entsprechende der zumindest einen masterfähigen Einrichtungen ist.

17. System nach einem der Ansprüche 11 bis 16,
wobei die Master-Einrichtung (220) umfasst:
- einen Speicher (222), der betriebsfähig dafür ausgelegt ist, eine Mehrzahl ausführbarer Befehle zu speichern, und
- zumindest eine Verarbeitungseinrichtung, die betriebsfähig mit dem Speicher (222) gekoppelt ist, so dass die zumindest eine Verarbeitungseinrichtung in Antwort auf die ausführbaren Befehle betriebsfähig dafür ausgelegt ist:
- die Signalverarbeitungsroutine basierend auf zumindest einer der Mehrzahl Slave-Einrichtungen (206, 208, 210, 212, 214, 216) festzulegen, und
- die Videoverzögerungszeitspanne basierend auf der Signalverarbeitungsroutine zu berechnen.

18. System nach einem der Ansprüche 11 bis 17,
wobei die Master-Einrichtung (220) betriebsfähig dafür ausgelegt ist, die Videoinformationen entsprechend der festgelegten Signalverarbeitungsroutine unter Verwendung der Mehrzahl Slave-Einrichtungen (206, 208, 210, 212, 214, 216) über einen spezifischen Pfad zu führen.

## Revendications

1. Procédé de synchronisation automatique de sorties audio et vidéo, le procédé comprenant :
le calcul d'une période de temps de retard vidéo sur la base d'une routine de traitement de signaux incluant un flux de données désigné entre une pluralité d'éléments de traitement pour générer le signal d'affichage vidéo ; et
la définition automatique d'un retard audio pour être approchant de la période de temps de retard vidéo ;
**caractérisé par** :
la détermination d'une pluralité de dispositifs esclaves comme la pluralité d'éléments de traitement pour générer le signal d'affichage vidéo ; et
la détermination de la routine de traitement de signaux comprenant le flux de données désigné entre la pluralité de dispositifs esclaves sur la base de la disponibilité et de la qualité de chacun de la pluralité de dispositifs esclaves par un dispositif maître.

2. Procédé selon la revendication 1, comprenant en outre la génération du signal d'affichage vidéo en utilisant la routine de traitement de signaux.

3. Procédé selon la revendication 1 ou la revendication 2, comprenant en outre la génération d'un signal d'affichage audio après un intervalle de temps de la période de temps de retard vidéo.

4. Procédé selon la revendication 3, comprenant en outre la délivrance du signal d'affichage audio à un dispositif d'affichage audio, dans lequel le dispositif d'affichage audio est une pluralité de haut-parleurs.

5. Procédé selon l'une quelconque des revendications précédentes, comprenant en outre :
la délivrance du signal d'affichage vidéo à un dispositif d'affichage vidéo.

6. Procédé selon la revendication 5, dans lequel le dispositif d'affichage vidéo est un téléviseur numérique.

7. Procédé selon l'une quelconque des revendications 1 à 6, comprenant en outre l'acheminement d'informations vidéo par l'intermédiaire d'une voie spécifiée correspondant à la routine de traitement de signaux en utilisant la pluralité de dispositifs esclaves.

8. Procédé selon l'une quelconque des revendications 1 à 7, dans lequel au moins un des dispositifs esclaves est également un dispositif apte à être maître.

9. Procédé selon l'une quelconque des revendications 1 à 8, dans lequel le dispositif maître et la pluralité de dispositifs esclaves sont en communication opérationnelle par l'intermédiaire d'un réseau.

10. Procédé selon l'une quelconque des revendications 1 à 9, incluant :
la détermination d'un dispositif maître parmi une pluralité de dispositifs aptes à être maîtres ; et
en utilisant le dispositif maître, la détermination de la routine de traitement de signaux pour générer le signal d'affichage vidéo.

11. Système (200) pour la synchronisation automatique de sorties audio et vidéo, le système **caractérisé par** :
une pluralité de dispositifs esclaves (206, 208, 210, 212, 214, 216) opérationnellement couplés ;
un dispositif maître (220) opérationnellement couplé à la pluralité de dispositifs esclaves (206, 208, 210, 212, 214, 216), le dispositif maître (220) utilisable pour déterminer une routine de traitement de signaux incluant un flux de données désigné entre la pluralité de dispositifs esclaves (206, 208, 210, 212, 214, 216) sur la base de la disponibilité et de la qualité de chacun de la pluralité de dispositifs esclaves (206, 208, 210, 212, 214, 216) et le dispositif maître (220) utilisable pour calculer une période de temps de retard vidéo sur la base de la routine de traitement de signaux ;
un de la pluralité de dispositifs esclaves (206, 208, 210, 212, 214, 216) utilisable pour recevoir un signal d'entrée vidéo et au moins un de la pluralité de dispositifs esclaves (206, 208, 210, 212, 214, 216) utilisable pour générer un signal de sortie vidéo ; et
un récepteur audio (250) opérationnellement couplé pour recevoir un signal d'entrée audio et utilisable pour générer un signal de sortie audio retardé d'une période de temps approchante de la période de retard vidéo.

12. Système selon la revendication 11, dans lequel le dispositif maître (220) est opérationnellement couplé à la pluralité de dispositifs esclaves (206, 208, 210, 212, 214, 216) par l'intermédiaire d'un réseau (204).

13. Système selon l'une quelconque des revendications 11 à 12, dans lequel chacun de la pluralité de dispositifs esclaves (206, 208, 210, 212, 214, 216) est un dispositif de traitement vidéo (202).

14. Système selon l'une quelconque des revendications 11 à 13, dans lequel le dispositif maître (220) est opérationnellement couplé à un dispositif de traitement audio de telle manière que le retard audio peut être programmé dans le dispositif de traitement audio.

15. Système selon l'une quelconque des revendications 11 à 14, comprenant en outre au moins un dispositif apte à être maître, chacun desquels est apte à agir comme le dispositif maître (220), dans lequel le dispositif maître (220) est un du au moins un dispositif apte à être maître et est utilisable pour déterminer ou est apte à recevoir une instruction indiquant qu'il est le dispositif maître (220).

16. Système selon la revendication 15, dans lequel un ou plusieurs de la pluralité de dispositifs esclaves (206, 208, 210, 212, 214, 216) est l'un correspondant de l'au moins un dispositif apte à être maître.

17. Système selon l'une quelconque des revendications 11 à 16, dans lequel le dispositif maître (220) comprend :
une mémoire (222) utilisable pour stocker une pluralité d'instructions exécutables ; et
au moins un dispositif de traitement opérationnellement couplé à la mémoire (222) de telle manière que l'au moins un dispositif de traitement est utilisable en réponse aux instructions exécutables pour :
déterminer la routine de traitement de signaux sur la base d'au moins un de la pluralité de dispositifs esclaves (206, 208, 210, 212, 214, 216) ; et
calculer la période de temps de retard vidéo sur la base de la routine de traitement de signaux.

18. Système selon l'une quelconque des revendications 11 à 17, dans lequel le dispositif maître (220) est utilisable pour acheminer les informations vidéo par l'intermédiaire d'une voie spécifique correspondant à la routine de traitement de signaux déterminée en utilisant la pluralité de dispositifs esclaves (206, 208, 210, 212, 214, 216).
